# EUROPÄISCHE PATENTSCHRIFT

(11) **EP 2 040 984 B1**
(45) Veröffentlichungstag und Bekanntmachung des Hinweises auf die Patenterteilung: **23.12.2009**
(21) Anmeldenummer: 06764040.9
(22) Anmeldetag: 04.07.2006
(51) Int. Cl.: B65B 57/20, B65B 5/10

(54) **VERFAHREN ZUM BEFÜLLEN VON BEHÄLTERN MIT STÜCKGÜTERN**
METHOD FOR FILLING CONTAINERS WITH BULK GOODS
PROCEDE DE REMPLISSAGE DE CONTENEURS AVEC DES MARCHANDISES DIVERSES

(43) Veröffentlichungstag der Anmeldung: 01.04.2009
(73) Patentinhaber: Robert Bosch GmbH, 70442 Stuttgart (DE)
(72) Erfinder: TISCHHAUSER, Reto, 82223 Eichenau (DE)
(86) Internationale Anmeldenummer: PCT/EP2006/063838
(87) Internationale Veröffentlichungsnummer: WO 2008/003350

(56) Entgegenhaltungen:
- EP-A- 1 285 851
- EP-A- 1 593 598
- EP-A1- 0 749 902
- DE-A1- 4 208 818
- FR-A- 2 754 239

## Beschreibung

### Technisches Gebiet

Die Erfindung betrifft ein Verfahren zum Befüllen von Behältern mit Stückgütern gemäss Oberbegriff des Patentanspruchs 1.

### Stand der Technik

Stückgüter, welcher von Produktionsanlagen herkommend über Zuführförderer in eine Verpackungsstrecke angeliefert werden, lassen sich vollautomatisch mittels Robotern in die vorgesehenen Behälter legen. EP 0 250 470 offenbart derartige Roboter, auch Picker oder Deltaroboter genannt, welche für den Einsatz in Verpackungsstrassen geeignet sind. Es handelt sich um einen Roboter mit einem Grundkörper, an den über drei zweiteilige Arme ein Arbeitsteil angelenkt ist, an welchem wiederum Greifer oder Saugerelemente angeordnet sind. Aus US 6 543 987 und US 6 896 473 sind Weiterentwicklungen bekannt, in welchen der Deltaroboter über eine längenveränderbare vierte Achse verfügt. Anstelle der Deltaroboter sind auch andere Pick & Place Roboter geeignet, beispielsweise auch die sogenannten Scara Roboter oder 6-Achs-Roboter.

Üblicherweise werden Stückgüter und Behälter auf zwei oder mehr parallel zueinander verlaufenden Zuführförderern transportiert, wobei die Picker die Stückgüter bei kontinuierlich oder schrittweise sich bewegenden Förderern einzeln oder in Gruppen erfassen und in die Behälter ablegen.

EP 0 749 902 A beschreibt eine Anlage, bei welcher die Stückgüter und die Behälter im Gleichstrom, d.h. parallel und in gleicher Richtung zueinander, transportiert werden. EP 0 865 465 A offenbart eine Anlage mit Gegenstromprinzip, d.h. die Behälterförderer verlaufen zwar parallel zum Stückgutförderer, jedoch in Gegenrichtung zur Förderrichtung des Stückgutförderers.

EP 1 285 851 A schlägt ein Verfahren vor, um die Lebens- bzw. maximale Einsatzdauer der Pickerroboter, welche entlang derartiger Pickerstrassen im Gleich- oder Gegenstromprinzip eingesetzt werden, zu erhöhen. Die Roboter werden hierfür nach Massgabe der Anordnung der Stückgüter auf dem Zufuhrförderer so gesteuert, dass sie zeitlich möglichst gleichmässig ausgelastet sind und keinen starken Leistungsschwankungen ausgesetzt sind.

In EP 1 352 831 A wird die Relativgeschwindigkeit zwischen der Zufuhr der Behälter und der Zufuhr der Stückgüter im Bereich der Pickerstrasse gesteuert. Die Steuerung der Relativgeschwindigkeit erfolgt dabei in Abhängigkeit eines Füllstandes mindestens eines Speicherelements. Dieses Verfahren ermöglicht eine effiziente Umsetzung von Stückgütern in Behälter bei möglichst vollständiger Befüllung.

All diese Verfahren beschäftigen sich jedoch mit dem Normalbetrieb der Anlage. Es wird immer davon ausgegangen, dass genügend Stückgüter angeliefert werden bzw. dass eine Knappheit baldmöglichst behoben wird. Bei Produktionsende, z.B. bei einem Produkte- oder Formatwechsel, aber auch bei einer Reinigung der Anlage oder einem unerwarteten Ausfall der Stückgutproduktionsanlage, liegen zu wenig Stückgüter auf dem Zufuhrförderer bereit, um alle bereits auf dem Behälterförderer befindlichen Behälter vollständig füllen zu können. Üblicherweise besteht das Problem, dass zum Zeitpunkt des Stoppens des Produktionsprozesses die Anzahl der noch auf dem Stückgutförderer befindlichen Produkte nicht mit der Anzahl der noch zu befüllenden Ablegepositionen oder Plätze im Behälter übereinstimmt. Besonders beim Gegenstromprinzip, wo zudem noch die Produkte von den noch zu befüllenden Behältern "weglaufen", sind aber schon viele Behälter teilweise gefüllt. Diese teilgefüllten Behälter können dann nicht mehr gefüllt werden.

Unvollständig befüllte Behälter werden bei der Endkontrolle, üblicherweise durch eine Waage, als den Qualitätsanforderungen ungenügend ausgesondert und müssen von Hand nachgefüllt werden oder als Ausschuss entsorgt werden. Auch die zuletzt auf dem Stückgutförderer liegen gebliebenen Stückgüter müssen von Hand abgeräumt und entsorgt werden. Der Produkteausschuss ist nicht unerheblich. Zudem muss genügend Personal zur Verfügung stehen. Sollen kritische Stückgüter wie beispielsweise Biskuits verpackt werden, dürfen die teilbefüllten Behälter nicht zu lange unverarbeitet liegen bleiben. Dies ist besonders bei häufigen Produktewechseln zeitaufwendig und senkt die die Produktivität der Anlage

### Darstellung der Erfindung

Es ist deshalb eine Aufgabe der Erfindung, ein Verfahren zu schaffen, welches bei Produktionsende bzw. bei Stückgutmangel oder einer sonstigen Produktionsunterbrechung ein vollständig automatisches und optimiertes Verteilen der noch auf dem Zufuhrförderer verbleibenden Stückgüter in die Behälter bzw. in die Ablagepositionen ermöglicht.

Diese Aufgabe löst ein Verfahren mit den Merkmalen des Patentanspruchs 1.

Im erfindungsgemässen Verfahren zum Einsetzen von Stückgütern in, eine bestimmte Füllanzahl von Stückgütern aufnehmende Ablagepositionen, insbesondere Behälter, werden die Stückgüter auf mindestens einem Stückgutförderer mindestens zwei in Förderrichtung hintereinander angeordneten Pickern zugeführt, um mittels dieser Picker in leere Plätze der auf mindestens einem Behälterförderer zugeführten Ablagepositionen, insbesondere Behälter, gefüllt zu werden. Bei abnehmendem oder ausbleibendem Nachschub an Stückgütern arbeiten die Picker mit einer gegenüber einem Normalbetrieb geänderten Füllstrategie, um teilweise gefüllte Ablagepositionen, insbesondere Behälter, möglichst zu vermeiden. Das heisst, die Picker arbeiten derart, dass vollständig gefüllte und ganz leere Ablagepositionen, insbesondere Behälter, aber kaum oder gar keine teilweise befüllte Ablagepositionen, insbesondere Behälter, die Anlage verlassen.

In einer erfindungsgemässen Variante des befüllt der mindestens eine in Förderrichtung des Behälterförderers stromaufwärts angeordnete Picker bevorzugt Behälter mit einem hohen Füllstand. Vollständig leere Behälter werden bevorzugt nicht mehr befüllt.

Dadurch lassen sich innerhalb kürzerster Zeit mit den noch auf dem Stückgutförderer befindlichen Stückgütern möglichst viele vollständig gefüllte Behälter bilden und möglichst alle Stückgüter abpacken. Dabei wird in Kauf genommen, dass der Behälterförderer zwischen den gefüllten Behältern auch einzelne leere Behälter zur Weiterverarbeitung wegtransportiert. Diese leeren Behälter lassen sich aus der Weiterbearbeitung entfernen, ohne dass das dabei Stückgüter entsorgt oder umgefiillt werden müssen.

Alternativ oder zusätzlich zur oben genannten Variante füllt der mindestens eine in Förderrichtung des Behälterförderers stromabwärts angeordnete Picker bevorzugt Stückgüter eines teilweise befüllten Behälters in einen anderen teilweise befüllten Behälter um. Dabei wird vorzugsweise bei der Entscheidung, ob von einem ersten Behälter Stückgüter entnommen oder in diesen Stückgüter hineingetan werden, die Anzahl Stückgüter in diesem ersten Behälter und die Summe aller Stückgüter in weiteren Behältern, welche sich gleichzeitig im Bearbeitungsbereich des mindestens einen stromaufwärts angeordneten Pickers befinden, berücksichtigt. Üblicherweise wird im Falle, dass in den weiteren Behältern genügend Stückgüter zum vollständigen Befüllen des ersten Behälters vorhanden sind, der erste Behälter befüllt. Im Falle, dass in den weiteren Behältern nicht genügend Stückgüter zum vollständigen Befüllen des ersten Behälters vorhanden sind, werden die Stückgüter aus dem ersten Behälter entnommen. Der erste Behälter ist vorzugsweise der jeweils im Bearbeitungsbereich befindliche in Förderrichtung des Behälterförderers unterste Behälter, das heisst, derjenige Behälter, welcher als ersten den Behälterförderer verlassen wird.

Tests haben ergeben, dass ein Leerfahren eines Stückgutförderers innerhalb weniger Minuten, insbesondere innerhalb von 10 Minuten, möglich ist. Eine manuelle Nachfüllung der Behälter entfällt. Auf dem Stückgutförderer verbleiben kaum mehr Stückgüter, Idealerweise weniger als notwendig sind, um einen Behälter ganz zu füllen. Das abschliessende Leerräumen des Stückgutförderers erfordert kaum Zeit.

Vorzugsweise wird mit reduzierter Fördergeschwindigkeit gearbeitet. Es kann aber auch mit voller Fördergeschwindigkeit, mit höherer Fördergeschwindigkeit oder mit sich stetig reduzierender Geschwindigkeit gearbeitet werden.

Weitere vorteilhafte Varianten des Verfahrens gehen aus den abhängigen Patentansprüchen hervor.

### Kurze Beschreibung der Zeichnung

Im folgenden wird der Erfindungsgegenstand anhand eines bevorzugten Ausführungsbeispiels, welches in der beiliegenden Zeichnung dargestellt ist, erläutert. Es zeigen:
- Figur 1: eine schematische Darstellung eines Teils einer Verpackungsanlage mit Behälter- und Stückgutförderern und mehreren Robotern während des Normalbetriebs gemäss dem Stand der Technik im Gegenstromprinzip;
- Figur 2: die Verpackungsanlage gemäss Figur 1 kurz nach Produktionsende;
- Figur 3: die Verpackungsanlage gemäss Figur 1 in einem noch späteren Zeitpunkt;
- Figur 4: die Verpackungsanlage gemäss Figur 1, nachdem alle Stückgüter verpackt worden sind und
- Figur 5: eine schematische Darstellung eines Teils einer erfindungsgemässen Verpackungsanlage mit Behälter- und Stückgutförderern und mehreren Robotern nach Produktionsende, die im Gleichstromprinzip arbeitet.

### Wege zur Ausführung der Erfindung

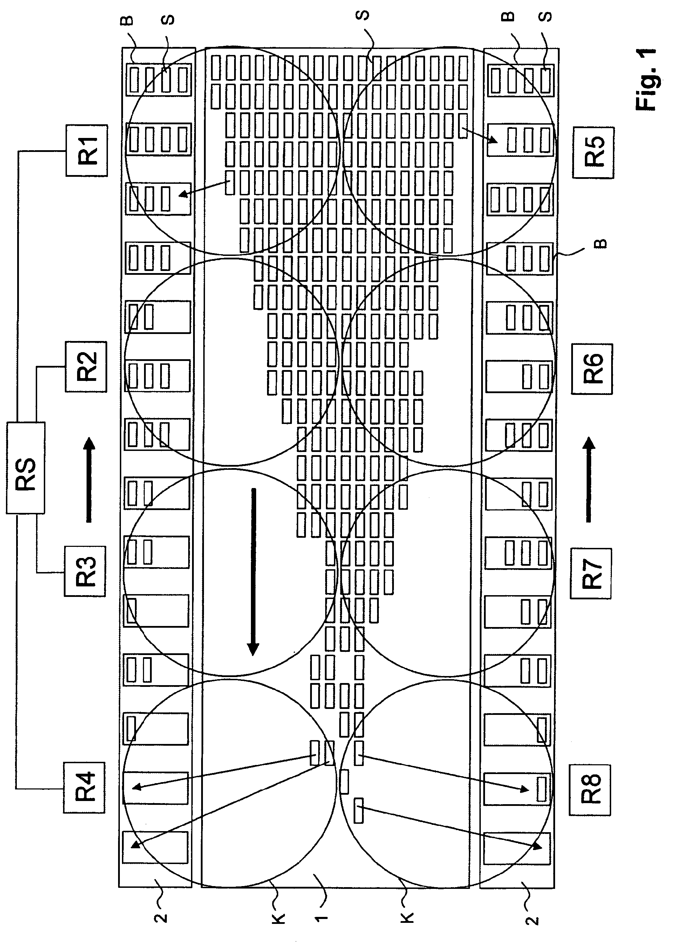

In Figur 1 ist schematisch eine Verpackungsanlage bekannter Art dargestellt. Sie weist je ein oder mehrere Förderer 1, 2 für Behälter B und Stückgüter S auf, welche vorzugsweise mindestens abschnittsweise parallel zueinander und in horizontaler Ebene verlaufen.

Die Förderer 1, 2 sind vorzugsweise im Falle der Stückgüter bzw. der Einzelprodukte endlos umlaufende Förderbänder oder im Falle der Behälter endlos umlaufende Mitnehmerketten. Es lassen sich jedoch auch andere bekannte Fördertypen verwenden. Im hier dargestellten Beispiel sind ein horizontal verlaufender Stückgutförderer 1 und zwei horizontal verlaufende Behälterförderer 2 vorhanden. Die Behälterförderer 2 sind beidseitig des Stückgutförderers 1 angeordnet und verlaufen vorzugsweise in derselben Ebene wie der Stückgutförderer 1. Die Transport- oder Förderrichtungen der einzelnen Förderern 1, 2 sind durch grosse, dicke Pfeile dargestellt. In diesem Beispiel wird im Gegenstromprinzip gearbeitet.

Entlang der Förderstrecke sind nacheinander einzelne Greifeinheiten R1 - R8 angeordnet. Die Greifeinheiten sind vorzugsweise Pickerroboter, insbesondere Deltaroboter der eingangs genannten Art, welche Stückgüter einzeln ergreifen und in die Behälter absetzen können. Es lassen sich jedoch auch andere Greif- und Umsetzeinheiten einsetzen, solange sie die nachfolgend beschriebenen erforderlichen Bewegungen ausführen können. Vorzugsweise können sich die Greifelemente der Greifeinheiten innerhalb eines Bereichs im zwei- vorzugsweise im dreidimensionalen Raum frei bewegen. Je nach Art der zu verpackenden Stückgüter lassen sich auch Greifeinheiten verwenden, welche die Stückgüter gruppiert aufnehmen und gemeinsam in die Behälter ablegen können.

Die Anzahl der verwendeten Roboter hängt von der gewünschten Leistung der Anlage ab und ist hier nicht erfindungswesentlich. Lediglich die untere Anzahl ist auf zwei begrenzt. Je nach Anordnung und Anzahl der Förderer sind auch die Picker R1 bis R8 unterschiedlich verteilt. Sie können beispielsweise alle auf einer Seite der Transportstrecke angeordnet sein. Sie können auch auf zwei gegenüberliegenden Seiten der Transportstrecke aufgereiht sein, wobei sie in diesem Fall jeweils einen direkt gegenüberliegenden Pickernachbarn haben können oder sie können jeweils versetzt zu den gegenüberliegenden Pickern angeordnet sein. Im hier dargestellten Beispiel sind auf jeder Seite je vier Roboter angeordnet: auf einer ersten Seite entlang eines ersten Behälterförderers 2 die Roboter R1 bis R4 und auf der zweiten Seite entlang eines zweiten Behälterförderers 2 die Roboter R5 bis R8. Die einzelnen Roboter sind im wesentlichen identisch. Ihr Arbeitsbereich K ist jeweils mit einem Kreis dargestellt. Die Kreise K könnten sich auch überlappen bzw. einen Abstand voneinander aufweisen.

Die Roboter R1 bis R8 sind über eine zentrale Steuerung RS miteinander verbunden. In den Figuren sind nur die Datenleitungen von den Robotern R1 bis R4 zur Steuerung RS gezeichnet. Selbstverständlich sind auch die übrigen Roboter R5 bis R8 mit der zentralen Steuerung verbunden. Die Roboter R1 bis R8 können zusätzlich oder anstelle ihrer individuellen Leitung zur Steuerung auch direkt miteinander verbunden sein.

Werden Roboter eingesetzt, so erhalten sie üblicherweise von der zentralen Steuerung lediglich die Informationen betreffend Füllstand der einzelnen Behälter und betreffend der Anordnung der Stückgüter auf dem Stückgutzuführer 1. Die Entscheidung, welches Stückgut als nächstes vom jeweiligen Roboter erfasst und in welchen Behälter abgelegt wird, wird von der lokalen Robotersteuerung selber gefällt. Diese Entscheidung wird jedoch an die zentrale Steuerung RS rückgemeldet, um so die anderen Roboter zu informieren. Damit diese Informationen möglichst ohne Rechenaufwand und somit möglichst schnell ausgetauscht werden können, ist das gesamte Produkteband und die Behälter vorzugsweise in eine oder mehrere Matrizen oder Vektoren im Sinne von Warteschlangen unterteilt, wobei jede mögliche Position eine Position in der Matrix einnimmt oder in den Vektoren abgelegt ist. Es werden die Positionen, d.h. x-/y-Koordinaten, aller Stückgüter durch die Bildverarbeitung erfasst. Die Strategie, nach welcher der Roboter entscheidet, welches der im Arbeitsbereich befindlichen Stückgüter er picken soll, basiert im Wesentlichen auf einer nach bestimmten Kriterien (z.B. Abstand der einzelnen Produkten von eine virtuellen Linie im Arbeitsbereich) erstellten Warteschlange. Dabei spielt es keine Rolle, ob die Stückgüter geordnet oder ungeordnet auf dem Stückgutförderer transportiert werden. Die Lage der realen Stückgüter wird nämlich vorzugsweise am oberen oder eingangsseitigen Ende des Stückgutförderers optisch erfasst und der zentralen Steuerung RS übermittelt. Es ist auch möglich, aber nicht notwendig, den Füllstand der Behälter an vorbestimmten Positionen während ihres Transports erneut optisch zu erfassen und an die zentrale Steuerung RS zu melden. Andere Arten der Produkteerkennung und Steuerung der Roboter sind möglich.

Im Normalbetrieb, welcher in Figur 1 dargestellt ist, ist der Stückgutförderer 1 genügend mit Stückgütern S bestückt, so dass alle Behälter B vollständig befüllt werden können. Zum Befüllen können die unterschiedlichsten Füllstrategien verwendet werden. Vorzugsweise wird die Strategie verwendet, wie sie in EP 1 285 851 beschrieben wird. Im Gegenstromverfahren füllen zudem vorzugsweise diejenigen Roboter, in deren Bearbeitungskreis K sich sehr viele Stückgüter auffalten, d.h. welche stromaufwärts des Stückgutförderers angeordnet sind, gezielt einzelne Löcher der bereits teilweise befüllten Behälter. Diejenigen Roboter hingegen, welche einem kargen Stückgutstrom ausgesetzt sind, welche sich somit stromabwärts des Stückgutförderers befinden, versuchen einfach jeden Behälter so gut wie möglich, vorzugsweise gleichmässig, zu befüllen . In allen Fällen nimmt der Füllgrad der einzelnen Behälter B während des Transports durch die Befüllstrecke kontinuierlich zu. Auf diese Weise wird im Normalbetrieb eine möglichst hohe Effizienz und Verpackungsleistung der Anlage erzielt. Es werden dabei stets nur Stückgüter vom Stückgutförderer oder allenfalls von einem Stückgutspeicher in die Behälter abgelegt. Innerhalb oder zwischen den Behältern findet im Normalbetrieb kein Stückgutaustausch statt.

Wird der Stückgut- oder Produktestrom nun jedoch beendet oder massivst reduziert, so wird dies von der optischen Erkennungseinheit am eingangsseitigen Ende des Zufuhrförderers bzw. von der zentralen Steuerung RS erkannt. Nimmt der Stückgutstrom nach einer vordefinierten Zeitspanne nicht mehr zu, so stellt die zentrale Steuerung RS auf die erfindungsgemässe Füllstrategie um. Ziel der neuen Füllstrategie ist, möglichst zu vermeiden, dass nur teilweise befüllte Behälter die Anlage verlassen. Diese Umstellung der Strategie kann auch direkt bei den einzelnen Robotern erfolgen, sobald sie über eine vordefinierte Zeit ein Rückgang der Anzahl Stückgüter gemeldet bekommen haben bzw. falls die ankommende Zahl an Stückgütern während einer vordefinierten Zeitspanne unterhalb eines Minimalwerts liegt. Der Minimalwert kann dabei für die einzelnen Roboter gleich oder verschieden sein.

Sollten später wieder mehr Stückgüter auf dem Stückgutförderer in die Verpackungsstrecke ankommen, so werden die zentrale Steuerung bzw. die einzelnen Roboter wieder automatisch auf Normalbetrieb umschalten.

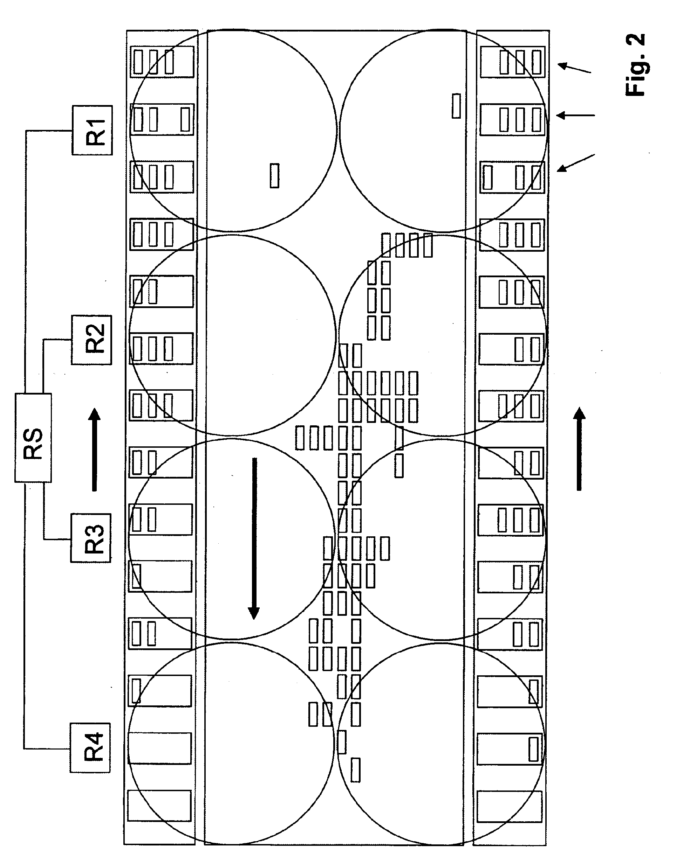

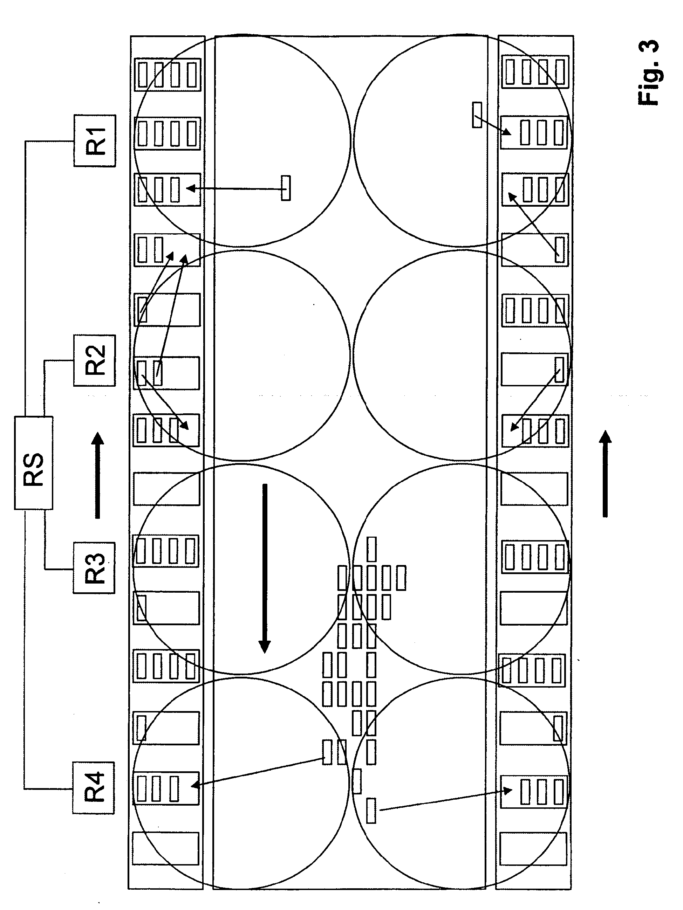

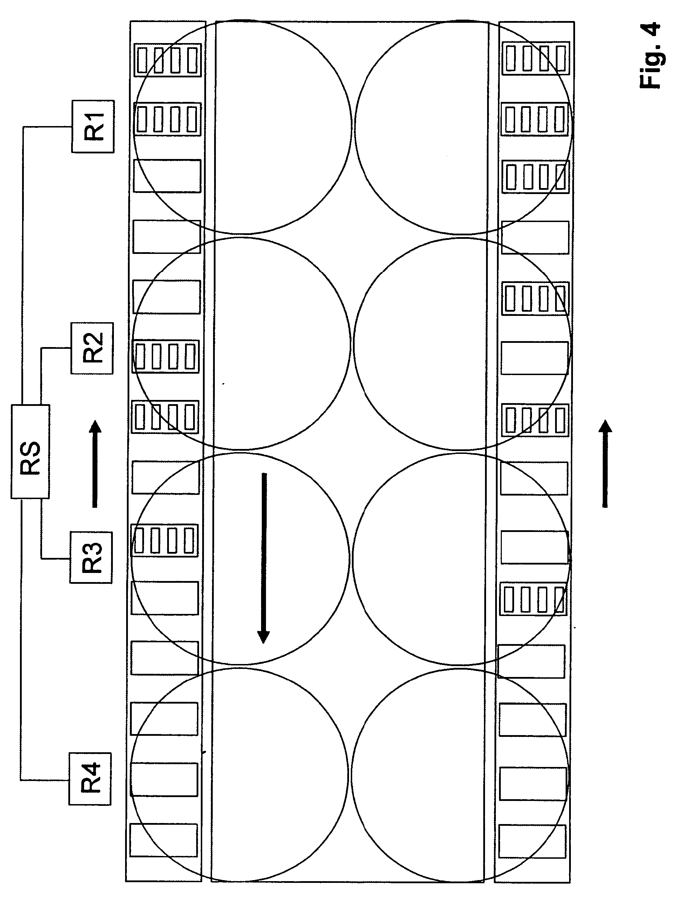

Die erfindungsgemässe Füllstrategie zum annähernd vollständigen Leeren des Stückgutförderbandes sieht wie folgt aus:
Die Fördergeschwindigkeiten des Stückgutförderers und der Behälterförderer werden reduziert, beispielsweise auf 60% im Vergleich zum Normalbetrieb. Die stromabwärts angeordneten Roboter ändern ihre Füllstrategie so, dass nun eher fast volle Behälter befüllt werden. Sie tun also im wesentlichen das, was im Normalbetrieb die stromaufwärts angeordneten Roboter getan haben, wobei sie im Gegensatz zu diesen leere Behälter ignorieren und nicht mehr zu füllen versuchen. Zur Erinnerung: im Normalbetrieb haben die unteren Roboter die am wenigsten befüllten Behälter bevorzugt, um einen möglichst gleichmässig ansteigenden Füllgrad der Behälter und damit eine möglichst konstante Fördergeschwindigkeit des Behältertransportes zu erzielen. In der geänderten Strategie fangen nun der stromaufwärts oberste oder mehrere stromaufwärts zuoberst angeordnete Roboter an, Stückgüter eines Behälters in einen anderen Behälter umzustapeln. Dieses Umfüllen ist in den Figuren 2 und 3 mit kleinen Pfeilen dargestellt. Dadurch verlassen im wesentlichen nur ganz volle und ganz leere Behälter die Füllstrecke, wie dies in Figur 4 erkennbar ist.

In einer bevorzugten Variante des Verfahrens zählt bzw. berücksichtigt der mindestens eine Roboter, welcher die Stückgüter von einem Behälter in den anderen umschichtet, die Anzahl Stückgüter im vordersten Behälter und die Summe aller Stückgüter in den nachfolgenden Behältern, welche in seinem Bearbeitungskreis K liegen. Hat es in den nachfolgenden Behältern genügen Stückgüter, um den vordersten Behälter aufzufüllen, so wird er aufgefüllt, indem er diese Stückgüter von den nachfolgenden Behältern in den vordersten umschichtet. Hat es zuwenig Stückgüter, so entnimmt er dem vordersten Behälter wenn möglich sämtliche Stückgüter und schichtet sie in nachfolgende Behälter um. Falls er ein Stückgut vom Stückgutförderer verwenden kann, um einen Behälter noch vollständig zu füllen, so entnimmt er auch noch zusätzlich, aber nicht bevorzugt, Stückgüter vom Stückgutförderer. Falls sich zu viele Stückgüter in den Behältern befinden, um die Behälter, welche sich im Bearbeitungskreis K des oder der letzten Roboter befinden, vollständig zu leeren oder zu füllen, so werden diese überzähligen Stückgüter auf den Stückgutförderer zurückgelegt, um stromabwärts wieder aufgepickt zu werden.

Picker, welche zwischen einem stromabwärts zuunterst angeordneten Picker und einem stromaufwärts zuoberst angeordneten Picker, angeordnet sind, gehen während des Entleervorgangs vorzugsweise in Abhängigkeit der noch auf dem Stückgutförderer vorhandenen Stückgüter von der Füllstrategie des untersten Pickers zur Füllstrategie des obersten Pickers über. Das heisst, zuerst befüllen sie die Behälter und am Schluss, wenn fast keine Stückgüter mehr auf dem Stückgutförderer zu finden sind, schichten sie in den Behältern die Stückgüter um. Dabei können sie gemeinsam oder nacheinander die Füllstrategie ändern.

Während dem Entleerverfahren können auch alle Picker oder zumindest die obersten Picker Stückgüter aus bereits teilweise gefüllten Behältern auf den Stückgutförderer zurücklegen.

Dieser Entleerungsvorgang benötigt lediglich wenige Minuten, um den Stückgutförderer möglichst vollständig zu leeren und die Behälter entweder ganz gefüllt oder leer den Behälterförderer verlassen zu lassen. Diese Situation ist in Figur 4 dargestellt.

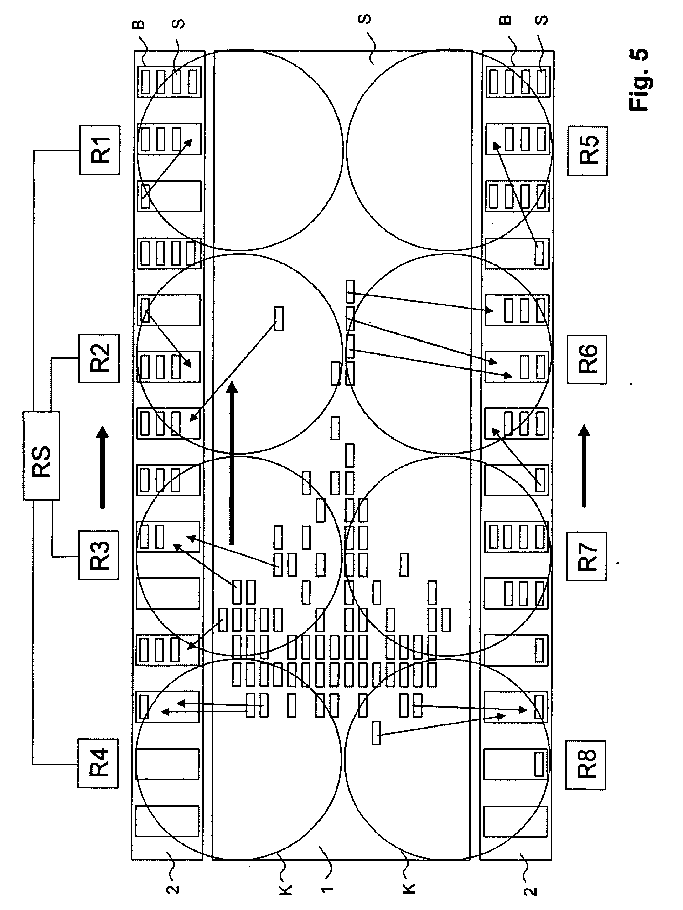

Das erfindungsgemässen Verfahren wurde anhand einer im Gegenstrom arbeitenden Anlage erklärt. Es lässt sich jedoch auch in einer im Gleichstrom betriebenen Anlage verwenden, wie dies in Figur 5 erkennbar ist In diesem Fall werden die stromaufwärts angeordneten Roboter vor allem die vollen Behälter bevorzugen und dort noch einzelne Stückgüter ablegen. Die stromabwärts angeordneten Roboter werden dann praktisch ausschliesslich die in den nur teilweise gefüllten Behältern liegenden Stückgüter in andere Behälter umschichten. Im Gleichstromverfahren ist die Wahrscheinlichkeit, dass sich bei den stromabwärts angeordneten Robotern noch ein Produkt auf dem Stückgutförderer befindet, eher gering. Die mittleren Roboter werden dabei zuerst die Strategie der oberen und anschliessend der unteren Roboter übernehmen in Abhängigkeit davon, wie viele Stückgüter noch bei ihnen anlagen.

Vergleicht man nun die oben beschriebenen Strategien bei der Entleerung der Anlage im Falle des Gegenstroms und im Falle des Gleichstroms, so wird deutlich, dass in beiden Fällen in den Behältern, welche den Behälterförderer als erste verlassen, d.h. in den in Förderrichtung des Behälterförderers stromabwärts angeordneten untersten Behälter umgeschichtet wird und dass die zuletzt in die Anlage ankommenden Behälter, d.h. die in Förderrichtung des Behälterförderers stromaufwärts angeordneten oberen Behälter entweder möglichst vollständig befüllt werden oder ganz leer gelassen werden.

Diverse Varianten des Verfahrens sind möglich. So ist es bei Gleichstrom auch möglich, denselben Förderer als Stückgut-, wie auch als Behälterförderer zu verwenden. Die Stückgüter lassen sich in diesem Fall auf demselben Band umsortieren bzw. gruppieren. Anstelle von Behältern lassen sich auch Kavitäten oder Teilungen von Ketten oder in andere Ablagepositionen ablegen. Die Stückgüter müssen auch nicht nebeneinander abgelegt werden, sondern sie können auch übereinander gestapelt werden. Wenn im Text und in den Patentansprüchen somit von Behältern gesprochen wird, sind damit stets auch andere Arten von definierten Ablagepositionen gemeint und umfasst.

In einer Variante des Verfahrens wird die Anzahl der verbleibenden Stückgüter auf dem Stückgutförderer kontrolliert und falls diese Zahl unter die notwendige Anzahl zur vollständigen Befüllung eines Behälters fällt, werden die Stückgüter nicht mehr gepickt, sondern kontrolliert ausgeschleust, beispielsweise am Ende des Stückgutförderers. Sie müssen somit nicht manuell aus einem Behälter entfernt werden.

## Patentansprüche

1. Verfahren zum Einsetzen von Stückgütern (S) in, eine bestimmte Füllanzahl von Stückgütern aufnehmende Ablagepositionen, insbesondere Behälter (B), wobei die Stückgüter (S) auf mindestens einem Stückgutförderer (1) mindestens zwei in Förderrichtung hintereinander angeordnete Picker (R1 - R8) zugeführt werden, um mittels dieser Picker (R1 - R8) in leere Plätze der auf mindestens einem Behälterförderer (2) zugeführten Ablagepositionen, insbesondere Behälter (B), gefüllt zu werden, wobei bei abnehmendem oder ausbleibendem Nachschub an Stückgütern die Picker mit einer gegenüber einem Normalbetrieb geänderten Füllstrategie arbeiten, um teilweise gefüllte Ablagepositionen, insbesondere Behälter, möglichst zu vermeiden.

2. Verfahren nach Anspruch 1, wobei bei der geänderten Füllstrategie mindestens einer in Förderrichtung des Behälterförderers stromaufwärts angeordnete Picker bevorzugt Behälter (B) mit einem hohen Füllstand befüllt und vollständig leere Behälter bevorzugt nicht mehr befüllt.

3. Verfahren nach einem der Ansprüche 1 oder 2, wobei der mindestens eine in Förderrichtung des Behälterförderers stromabwärts angeordnete Picker bevorzugt Stückgüter eines teilweise befüllten Behälters in einen anderen teilweise befüllten Behälter umfüllt.

4. Verfahren nach Anspruch 3, wobei bei der Entscheidung, ob von einem ersten Behälter Stückgüter entnommen oder in diesen Stückgüter hineingetan werden, die Anzahl Stückgüter in diesem ersten Behälter und die Summe aller Stückgüter in weiteren Behältern, welche sich gleichzeitig im Bearbeitungsbereich des mindestens einen in Förderrichtung des Behälterförderers stromabwärts angeordneten Pickers befinden, berücksichtigt werden.

5. Verfahren nach Anspruch 4, wobei im Falle, dass in den weiteren Behältern genügend Stückgüter zum vollständigen Befüllen des ersten Behälters vorhanden sind, der erste Behälter befüllt wird, und dass im Falle, dass in den weiteren Behältern nicht genügend Stückgüter zum vollständigen Befüllen des ersten Behälters vorhanden sind, die Stückgüter aus dem ersten Behälter entnommen werden.

6. Verfahren nach einem der Ansprüche 4 oder 5, wobei der erste Behälter der jeweils im Bearbeitungsbereich befindliche in _Förderrichtung des Behälterförderers stromabwärts unterste Behälter ist.

7. Verfahren nach einem der Ansprüche 3 bis 6, wobei der mindestens eine in Förderrichtung des Behälterförderers stromabwärts angeordnete Picker auf dem Stückgutförderer transportierte Stückgüter in die Behälter ablegt.

8. Verfahren nach einem der Ansprüche 3 bis 7, wobei Picker, welche zwischen einem in Förderrichtung des Behälterförderers stromaufwärts zuoberst angeordneten Picker und einem stromabwärts zuunterst angeordneten Picker, angeordnet sind, in Abhängigkeit der noch auf dem Stückgutförderer vorhandenen Stückgüter von der Füllstrategie des obersten Pickers zur Füllstrategie des untersten Pickers übergehen.

9. Verfahren nach einem der Ansprüche 1 bis 8, wobei Stückgüter aus bereits teilweise gefüllten Behältern auf den Stückgutförderer zurückgelegt werden.

10. Verfahren nach einem der Ansprüche 1 bis 9, wobei der Stückgutförderer und der Behälterförderer mit voller oder reduzierter Geschwindigkeit fördern.

11. Verfahren nach einem der Ansprüche 1 bis 10, wobei die Förderrichtung des mindestens einen Stückgutförderers parallel aber in Gegenrichtung zur Förderrichtung des mindestens einen Behälterförderers verläuft.

12. Verfahren nach einem der Ansprüche 1 bis 10, wobei die Förderrichtung des mindestens einen Stückgutförderers parallel und in gleicher Richtung zur Förderrichtung des mindestens einen Behälterförderers verläuft.

13. Verfahren nach einem der Ansprüche 1 bis 12, wobei als mindestens ein Stückgutförderer ein horizontal verlaufendes Förderband verwendet wird.

## Claims

1. Method for the insertion of bulk goods (S) into repository positions, in particular containers (B), which receive a specific filling number of bulk goods, the bulk goods (S) being fed on at least one bulk-goods conveyor (1) to at least two pickers (R1 - R8) arranged one behind the other in the conveying direction, in order to be introduced by means of these pickers (R1 - R8) into empty places in the repository positions, in particular containers (B), fed on at least one container conveyor (2), and, in the case of a decreasing or absent follow-up of bulk goods, the pickers operating with a filling strategy which is changed, as compared with normal operation, in order as far as possible to avoid partially filled repository positions, in particular containers.

2. Method according to Claim 1, in which, in the case of the changed filling strategy of at least one picker arranged upstream in the conveying direction of the container conveyor, preferably containers (B) with a high filling level are filled and preferably completely empty containers are no longer filled.

3. Method according to either one of Claims 1 and 2, in which the at least one picker arranged downstream in the conveying direction of the container conveyor preferably transfers bulk goods of one partially filled container into another partially filled container.

4. Method according to Claim 3, in which the decision as to whether bulk goods are removed from a first container or bulk goods are put into this takes into account the number of bulk goods in this first container and the sum of all the bulk goods in further containers which are located simultaneously in the processing range of the at least one picker arranged downstream in the conveying direction of the container conveyor.

5. Method according to Claim 4, in which, in the event that sufficient bulk goods for the complete filling of the first container are present in the further containers, the first container is filled, and, in the event that insufficient bulk goods for the complete filling of the first container are present in the further containers, the bulk goods are removed from the first container.

6. Method according to either one of Claims 4 and 5, in which the first container is in each case the container which is lowest downstream in the conveying direction of the container conveyor and is located in the processing range.

7. Method according to one of Claims 3 to 6, in which the at least one picker arranged downstream in the conveying direction of the container conveyor deposits bulk goods transported on the bulk-goods conveyor into the containers.

8. Method according to one of Claims 3 to 7, in which pickers which are arranged between a picker arranged at the top upstream in the conveying direction of the container conveyor and a picker arranged at the bottom downstream change over from the filling strategy of the uppermost picker to the filling strategy of the lowest picker as a function of the bulk goods still present on the bulk-goods conveyor.

9. Method according to one of Claims 1 to 8, in which bulk goods from already partially filled containers are put back onto the bulk-goods conveyor.

10. Method according to one of Claims 1 to 9, in which the bulk-goods conveyor and the container conveyor convey at full or reduced speed.

11. Method according to one of Claims 1 to 10, in which the conveying direction of the at least one bulk-goods conveyor runs parallel to, but in the opposite direction to the conveying direction of the at least one container conveyor.

12. Method according to one of Claims 1 to 10, in which the conveying direction of the at least one bulk-goods conveyor runs parallel to and in the same direction as the conveying direction of the at least one container conveyor.

13. Method according to one of Claims 1 to 12, in which a horizontally running conveyor belt is used as the at least one bulk-goods conveyor.

## Revendications

1. Procédé pour introduire des articles (S) dans des positions de dépôt recevant un nombre déterminé d'articles, en particulier des conteneurs (B), les articles (S) étant acheminés sur au moins un convoyeur d'articles (1) à au moins deux dispositifs de préhension (R1-R8) disposés l'un derrière l'autre dans la direction de transport, afin d'être placés au moyen de ces dispositifs de préhension (R1-R8) dans des places vides de positions de dépôt, en particulier des conteneurs (B), acheminés à au moins un convoyeur de conteneurs (2), les dispositifs de préhension travaillant, lors de l'acheminement diminuant ou constant d'articles, avec une stratégie de remplissage modifiée par rapport à un fonctionnement normal, afin d'éviter dans la mesure du possible des positions de dépôt, en particulier des conteneurs, partiellement remplis.

2. Procédé selon la revendication 1, dans lequel la stratégie de remplissage modifiée d'au moins un dispositif de préhension disposé en amont dans la direction d'avance du convoyeur de conteneurs remplit de préférence des conteneurs (B) avec un haut niveau de remplissage et ne remplit de préférence plus les conteneurs complètement vides.

3. Procédé selon l'une quelconque des revendications 1 ou 2, dans lequel l'au moins un dispositif de préhension disposé en aval dans la direction d'avance du convoyeur de conteneurs transfère de préférence des articles d'un conteneur partiellement rempli à un autre conteneur partiellement rempli.

4. Procédé selon la revendication 3, dans lequel, lorsque l'on décide d'enlever des articles d'un premier conteneur ou de les mettre dans ce conteneur, on tient compte du nombre des articles dans ce premier conteneur et de la somme de tous les articles dans d'autres conteneurs, qui se trouvent simultanément dans la région de traitement de l'au moins un dispositif de préhension disposé en aval dans la direction d'avance du convoyeur de conteneurs.

5. Procédé selon la revendication 4, dans lequel, au cas où il y a suffisamment d'articles dans les autres conteneurs pour remplir complètement le premier conteneur, le premier conteneur est rempli, et au cas où il n'y a pas suffisamment d'articles dans les autres conteneurs pour remplir complètement le premier conteneur, les articles sont enlevés du premier conteneur.

6. Procédé selon l'une quelconque des revendications 4 ou 5, dans lequel le premier conteneur est le conteneur se trouvant à chaque fois le plus en bas en aval dans la région de préparation dans la direction d'avance du convoyeur de conteneurs.

7. Procédé selon l'une quelconque des revendications 3 à 6, dans lequel l'au moins un dispositif de préhension disposé en aval dans la direction d'avance du convoyeur de conteneurs dépose des articles transportés sur le convoyeur d'articles dans les conteneurs.

8. Procédé selon l'une quelconque des revendications 3 à 7, dans lequel des dispositifs de préhension qui sont disposés entre un dispositif de préhension disposé le plus en haut en amont dans la direction d'avance du convoyeur de conteneurs et un dispositif de préhension disposé le plus en bas en aval, en fonction des articles encore présent sur le convoyeur d'articles, commutent de la stratégie de remplissage du dispositif de préhension le plus en haut à la stratégie de remplissage du dispositif de préhension le plus en bas.

9. Procédé selon l'une quelconque des revendications 1 à 8, dans lequel des articles provenant de conteneurs déjà partiellement remplis sont ramenés sur le convoyeur d'articles.

10. Procédé selon l'une quelconque des revendications 1 à 9, dans lequel le convoyeur d'articles et le convoyeur de conteneurs transportent à vitesse maximale ou à une vitesse réduite.

11. Procédé selon l'une quelconque des revendications 1 à 10, dans lequel la direction d'avance de l'au moins un convoyeur d'articles s'étend parallèlement mais en sens inverse à la direction d'avance de l'au moins un convoyeur de conteneurs.

12. Procédé selon l'une quelconque des revendications 1 à 10, dans lequel la direction d'avance de l'au moins un convoyeur d'articles s'étend parallèlement et dans le même sens que la direction d'avance de l'au moins un convoyeur de conteneurs.

13. Procédé selon l'une quelconque des revendications 1 à 12, dans lequel on utilise en tant qu'au moins un convoyeur d'articles une bande transporteuse s'étendant horizontalement.
